# EUROPEAN PATENT APPLICATION

(11) **EP 1 308 865 A1**
(43) Date of publication of application: **07.05.2003**
(21) Application number: 01956826.0
(22) Date of filing: 09.08.2001
(51) Int. Cl.: G06F 17/60, H04H 1/00

(54) **BROADCAST USING METHOD, RECEIVER, MOBILE TERMINAL, AND SERVICE PROVIDING DEVICE**

(30) Priority: 10.08.2000 JP 2000243108
(71) Applicant: NTT DoCoMo, Inc., Tokyo 100-6150 (JP)
(72) Inventor: NAGAOKA, Tatsuji, Sapporo-shi, Hokkaido 002-8072 (JP); NOMURA, Kazuo, Ota-ku, Tokyo 146-0083 (JP); HIRUMA, Yutaka, Nerima-ku, Tokyo 176-0001 (JP)
(74) Representative: HOFFMANN - EITLE
(86) International application number: JP0106879
(87) International publication number: WO02015068

(57) **Abstract**

A broadcast from a broadcast station 1 is received by a STB (Set-Top Box) 2. Next, a service request, which is based on the broadcast data received by the STB 2 and personal information stored by a mobile terminal 5, is transferred via a public network 3 to a TMS (Transaction Management System) 4. Information corresponding to this service request (such as coupon data) is transferred via a mobile communication network 6 to the mobile terminal 5. The user of the mobile terminal 5 takes the mobile terminal 5 that stores the coupon data to an available facility 7 and by displaying the coupon data is able to receive a special service corresponding to the coupon.

## Description

### TECHNICAL FIELD

The present invention relates to a broadcasting utilizing method that utilizes broadcasts to provide a variety of services, and to a receiver, a mobile terminal, and a service providing device for realizing the present broadcasting utilizing method.

### BACKGROUND ART

Teleshopping is one conventional example of how a variety of services may be provided using broadcasts. With teleshopping, it is common for viewers to purchase a product using the following method. First, the viewer writes down information, such as identification information and the price of a product introduced by a program and the telephone number at which purchases can be made. Based on this information, the viewer then makes a telephone call, states which product is desired, and gives information as to how the payment is to be made.

However, with the above arrangement, the viewer has to go to the trouble of writing down information during the program, and in some cases, the viewer is not able to get the information down in time. While some viewers do of course record the program onto videotape and write down the information during playback of the program, this still involves no little effort on the part of the viewer. The viewer also has to go to the trouble of manually dialing the appropriate telephone number and giving the required information over the phone, which is also an inconvenience and so can prevent viewers from making use of the services on offer.

### DISCLOSURE OF THE INVENTION

In view of the situation described above, the present invention has an object of providing a broadcasting utilizing method that can provide services by making effective use of broadcasts, as well as a receiver, a mobile terminal and a service providing device for realizing this broadcasting utilizing method.

In order to solve the problems described above, in the broadcasting utilizing method according to the present invention, a receiver receives a broadcast, extracts service information that is appended to the received broadcast, transmits the service information to a mobile terminal, obtains a user's service request that is generated by the mobile terminal based on the service information and personal information on the user stored in the mobile terminal, and transmits the service request to a service providing device. And the service providing device then provides the user with a service based on the service request. As one example, since other digital data can be appended to the image and audio data of a digital broadcast, by appending service information to a digital broadcast, services of a variety of forms can be achieved using such a broadcast.

With the broadcasting utilizing method of the present invention, the user does not have to manually input personal information every single time, so that users can make use of their desired services in a convenient manner with their personal information being protected. It should be noted that the receiver may have the extracted service information displayed on a television receiver or the like. Also, the service providing device may send requested service information directly to the mobile terminal or via the receiver. The mobile terminal may also transmit the service requests not to the receiver but directly to the service providing device.

In addition, the service providing device may store the personal information included in the service request which is received as taste information of the user. The service providing device may also supply this taste information to an outside device. By doing so, a service provider, such as a broadcast station, can develop appropriate services based on detailed personal records.

Here, the service information appended to the broadcast may be information showing the storage location of information, for example. Also, as examples, the service may be the provision of a coupon or a ringtone. The mobile terminal may be a mobile phone, for example.

The receiver mentioned above is used in a broadcasting utilizing system including a service providing device for providing services in response to service requests, which is received and related to a broadcast, and a mobile terminal that stores personal information on the user. The receiver receives a broadcast, extracts service information appended to the broadcast, receives a user's service request and the personal information from the mobile terminal, and transmits the service request and personal information to the service providing device. In addition, the receiver may receive information corresponding to the service request and has been transmitted from the service providing device, and transmit the information to the mobile terminal or have the information displayed on a television receiver or the like.

The mobile terminal mentioned above is used in a broadcasting utilizing system including a receiver for receiving a broadcast and a service providing device for providing services in response to service requests, the mobile terminal being carried by a user, storing personal information on the user, receiving service information appended to a broadcast and has been received by the receiver, generating a user's service request based on the service information and personal information, and transmitting the service request to the service providing device. At this point, the mobile terminal may transmit the service request to the service providing device via the receiver. Then, the mobile terminal may receive information corresponding to the service request from the service providing device. At this time, the mobile terminal may receive the information via the receiver.

Also, the service providing device mentioned above is used in a broadcasting utilizing system including a receiver for receiving broadcasts and a mobile terminal that stores personal information on the user, the service providing device receiving a user's service request from the receiver or the mobile terminal, and transmitting service information corresponding to the received service request that is received to the mobile terminal or the receiver so as to provide the user with a service.

### BRIEF DESCRIPTION OF THE DRAWINGS

FIG. 1 is a block diagram showing the construction of a basic system in which a broadcasting utilizing method of each embodiment of the present invention is used.
FIG. 2 is a block diagram showing the principal parts of the STB (Set-Top Box) 2 that forms part of the basic system.
FIG. 3 is a block diagram showing the principal parts of a TMS (transaction management system) 4 that forms part of the basic system.
FIG. 4 is a block diagram showing the principal parts of a mobile terminal 5 that forms part of the basic system.
FIG. 5 is a block diagram showing the operation of a system in which uses a broadcasting utilizing method according to a first embodiment of the present invention.
FIG. 6 is a block diagram showing the operation of a system that uses a broadcasting utilizing method according to a second embodiment of the present invention.
FIG. 7 is a block diagram showing the operation of a system that uses a broadcasting utilizing method according to a third embodiment of the present invention.
FIG. 8 is a block diagram showing the operation of a system that uses a broadcasting utilizing method according to a fourth embodiment of the present invention.
FIG. 9 is a block diagram showing the operation of a system that uses a broadcasting utilizing method according to a fifth embodiment of the present invention.
FIG. 10 is a block diagram showing the operation of a system that uses a broadcasting utilizing method according to a sixth embodiment of the present invention.
FIG. 11 is a block diagram showing the operation of a system that uses a broadcasting utilizing method according to a seventh embodiment of the present invention.
FIG. 12 is a block diagram showing the operation of a system that uses a broadcasting utilizing method according to an eighth embodiment of the present invention.
FIG. 13 is a block diagram showing the operation of a system that uses a broadcasting utilizing method according to a ninth embodiment of the present invention.
FIG. 14 is a block diagram showing the operation of a system that uses a broadcasting utilizing method according to a tenth embodiment of the present invention.
FIG. 15 shows a display screen image that is displayed on a television receiver in the system.
FIG. 16 shows a shopping transfer system according to an application example (Application example 1) of the broadcasting utilizing methods of the embodiments of the present invention.
FIG. 17 is shows an electronic ticket system according to an application example (Application example 2) of the broadcasting utilizing methods of the embodiments of the present invention.

### BEST MODE FOR CARRYING OUT THE INVENTION

The following describes several embodiments of the present invention, with reference to the drawings.

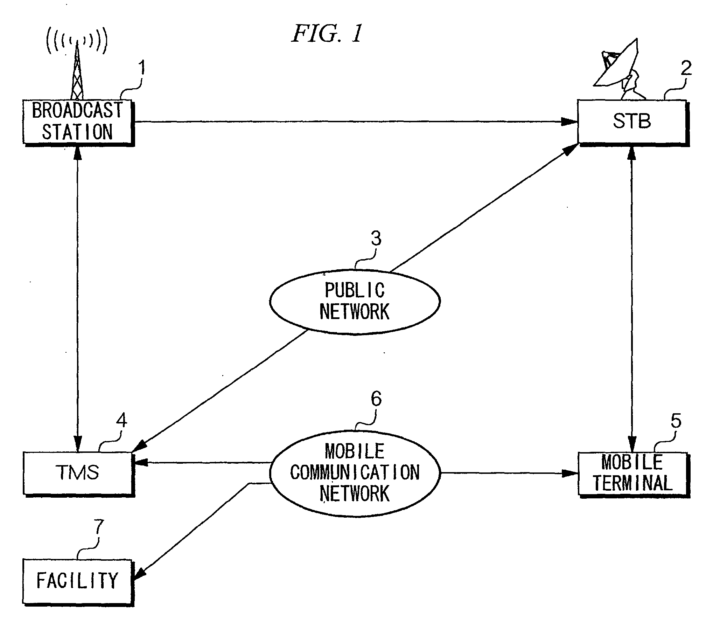

FIG. 1 is a block diagram showing the construction of a basic system in which the broadcast utilizing method of each embodiment of the present invention is used. Note that all of the components that construct the basic system shown in FIG. 1 are not necessarily used in each embodiment, with some components (or functions) being used in some embodiments and not used in others.

In this basic system, numeral 1 is a broadcast station that broadcasts programs. This broadcast station 1 may be a broadcast station for broadcasting programs using terrestrial waves, or a broadcast station for satellite broadcasts. The concept of the broadcast station 1 also includes other equipment, such as satellites and/or relay stations, for relaying the broadcasts. Numeral 2 is a STB (set-top box) for receiving broadcasts from the broadcast station 1, which is provided in each home.

Numeral 4 is a TMS (transmission management system), which is able to communicate with the STBs 2 via a public network 3. The broadcast station 1 and the TMS 4 are able to communicate with each other via a dedicated line or the public network 3. Numeral 5 is a mobile terminal that is carried by an individual user of the system described in these embodiments. As specific examples, the mobile terminal 5 may be a mobile phone or a PDA (personal data assistant) or the like that is capable of communicating via a mobile communication network 6.

The mobile terminal 5 is capable of communicating directly with the STB 2 and functions as a remote controller for the STB 2. The mobile terminal 5 and the TMS 4 are also capable of communicating with each other via the mobile communication network 6. It should be noted that numeral 7 is a facility (hereafter available facility), such as a shop, which is capable of communicating with the mobile terminal 5 via the mobile communication network 6 (or via a combination of the public network 3 and the mobile communication network 6).

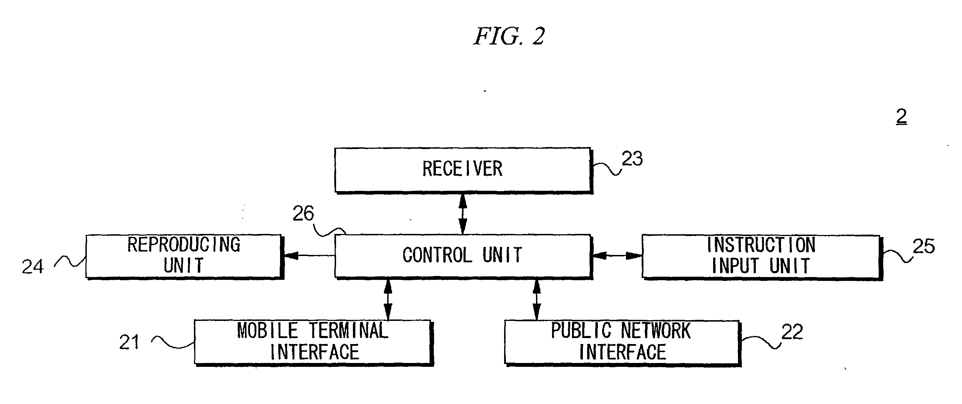

FIG. 2 is a block diagram showing the principal parts of an STB 2 that forms part of the basic system described above. As shown in FIG. 2, the STB 2 includes a mobile terminal interface 21 for performing wired or wireless communication with a mobile terminal 5, a public network interface 22 for performing communication via the public network 3, a receiver 23 for receiving broadcasts from the broadcast station 1, a reproducing unit 24 for reproducing the received broadcasts using a television receiver or the like (not shown in the drawing), an instruction input unit 25 for inputting instructions made via an operation panel, and a control unit 26 for controlling the other components of the STB 2 described above.

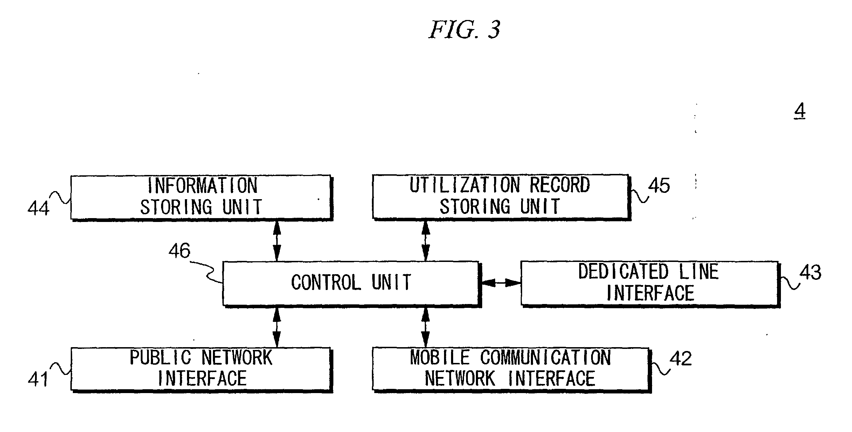

FIG. 3 is a block diagram showing the principal parts of a TMS 4 that forms part of the basic system described above. As shown in FIG. 3, the TMS 4 includes a public network interface 41 for performing communication via the public network 3, a mobile communication network interface 42 for performing communication via the mobile communication network 6, a dedicated line interface 43 for performing communication via the dedicated line, a provided information storing unit 44 for storing information that is to be provided to an STB 2 and/or a mobile terminal 5, a utilization record storing unit 45 for storing a record of accesses from an STB 2 and/or a mobile terminal 5 as a utilization record, and a control unit 46 for controlling the other components of the TMS 4 described above.

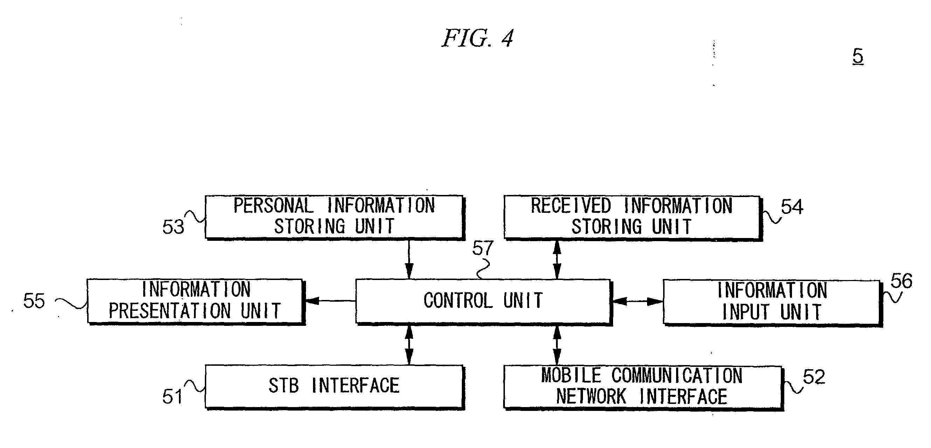

FIG. 4 is a block diagram showing the principal parts of a mobile terminal 5 that forms part of the basic system described above. As shown in FIG. 4, the mobile terminal 5 includes an STB interface 51 for performing wired or wireless communication with an STB 2, a mobile communication network interface 52 for performing communication via the mobile communication network 6, a personal information storing unit 53 for storing personal information that includes a user's interests, tastes, etc., a received information storing unit 54 for storing information that has been received from an STB 2 and/or a TMS 4, an information presentation unit 55 such as a LCD panel that can be viewed by the user and a speaker, an instruction input unit 56 such as a keypad that is operated by the user, and a control unit 57 for controlling the other components of the mobile terminal 5 described above.

The following describes several embodiments of the present invention with reference to the basic system of the construction described above. It should be noted that in order to simplify the explanation, detailed descriptions of the functions of the various apparatuses realized by the constructions described above are given where necessary in these embodiments. Also, in the following explanation, the user of the mobile terminal 5 is assumed to be the same as the user of the systems described in the embodiments.

### A: First Embodiment

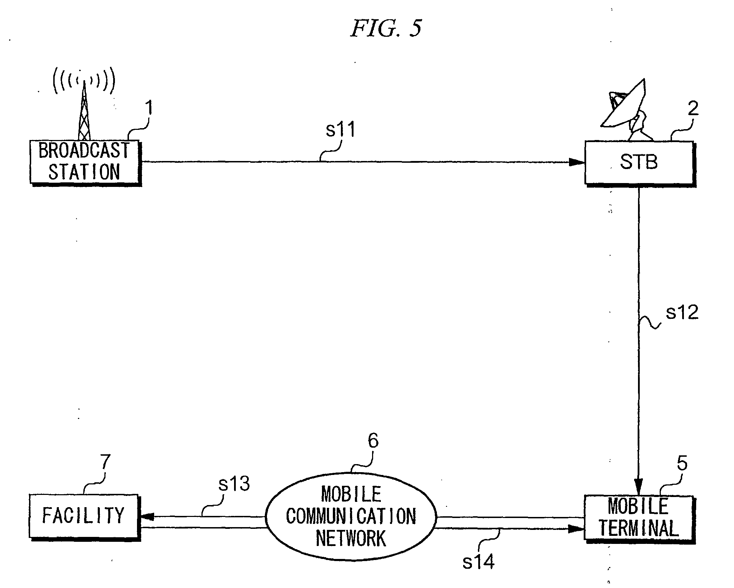

FIG. 5 is a block diagram showing the operation of a system that uses the broadcasting utilizing method according to a first embodiment of the present invention. In the broadcasting utilizing method shown in FIG. 5, a part of the broadcast data received by the STB 2 is directly transmitted to the mobile terminal 5. It should be noted that in order to simplify the explanation, the present embodiment only describes the operation of the present embodiment for the case of a service model where a broadcast is used to deliver coupon data that is used to purchase a product or service.

First, the broadcast station 1 broadcasts broadcast data that includes coupon data (s 11). As one example, the coupon data that is included in the broadcast data can express a coupon that can be used at an available facility that is introduced in the program represented by the broadcast data, and can include information used as an ordinary coupon. In the STB 2 that has received this broadcast data, the coupon data is extracted from the broadcast data and is transmitted to the mobile terminal 5 that can communicate with the STB 2 (s12). This coupon data is received by the mobile terminal 5 and is stored in the received information storing unit 54.

When the user operates the mobile terminal 5 and connects to an available facility 7 via the mobile communication network 6 to perform online shopping or the like after the coupon data has been stored, if the user instructs the mobile terminal 5 to use the coupon data to the available facility 7, the coupon data is transmitted from the mobile terminal 5 to the available facility 7 (s13). As a result, the available facility 7 provides the mobile terminal 5 with a service that takes the coupon data into account (s14). Putting this another way, when the coupon data has been received, the available facility 7 provides the user of the mobile terminal 5 with a service at a lower price than normal.

It should be obvious that the present method is not restricted to the example given above, so that during online shopping, the available facility 7 may investigate what kinds of coupon data are stored in the mobile terminal 5 and automatically obtain the appropriate coupon data if it is available. In this case, it is possible for the user to set whether the automatic obtaining of coupon data by the available facility 7 is allowed for the mobile terminal 5, so that the user can set a desired privacy level.

It should be noted that while the operation of the present embodiment has been described with the premise that the available facility 7 corresponds to an online shopping facility, this is not a restriction for the present method. As one example, instead of corresponding to an online shopping facility, the available facility 7 may correspond to a facility which the user visits to receive a service. In this case, a user who has come to the available facility 7 may operate the mobile terminal 5 to display the coupon data. The user may then show this to an attendant at the available facility 7 and consequently receive a service at a lower price than the standard price. It is also possible for users with coupons to be given products for free or to be provided with services that are only available to users with coupons.

### B: Second Embodiment

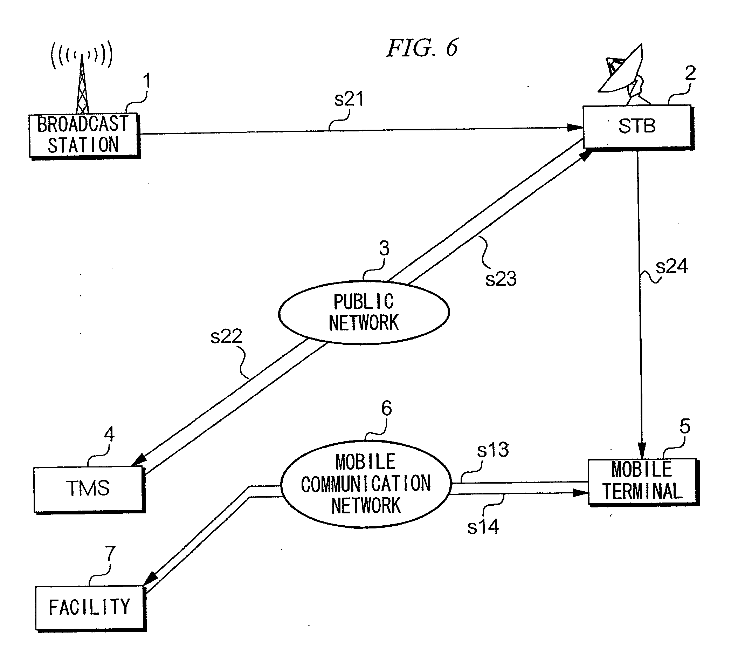

FIG. 6 is a block diagram showing the operation of a system that uses the broadcasting utilizing method according to a second embodiment of the present invention. In the broadcasting utilizing method shown in FIG. 6, based on the broadcast data received by the STB 2, the STB 2 obtains information from the TMS 4 and transmits the information to the mobile terminal 5.

As shown in FIG. 6, in the present embodiment the broadcast station 1 first broadcasts broadcast data (s21). The STB 2 that receives this broadcast data reproduces a program in accordance with the received broadcast data. If a user who is interested in the reproduced program operates the mobile phone 5 and inputs an instruction for the STB 2, a service request that includes the instruction and personal information on the user is generated in the mobile phone 5 and is sent to the STB 2 which transmits the request via the public network 3 to the TMS 4 (s22). In this example, a service request is information that requests coupon data which is desired by the user. Also, the instruction includes information (such as a telephone number) that can be used to exclusively specify the user of the mobile terminal 5.

The TMS 4 that has received the service request sends back the appropriate coupon data via the public network 3 (s23), and stores the personal information and details of the service request. After receipt of the coupon data from the TMS 4, the STB 2 transmits the coupon data to the mobile terminal 5 (s24). This coupon data is received and stored by the mobile terminal 5. The operation from this point onwards is the same as in the first embodiment (s13, s14).

### C: Third Embodiment

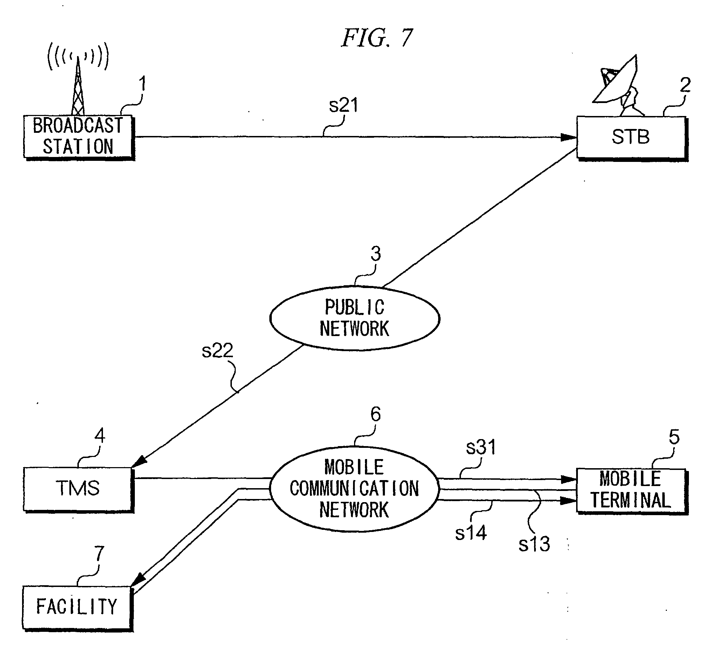

FIG. 7 is a block diagram showing the operation of a system that uses the broadcasting utilizing method according to a third embodiment of the present invention. In the broadcasting utilizing method shown in FIG. 7, the STB 2 requests the TMS 4 to transfer service information, which is appended to the broadcast and has been received by the STB 2. According to this request, the TMS 4 transmits the appropriate information to the mobile terminal 5.

As shown in FIG. 7, the present embodiment starts with the same processes as the operation of the second embodiment (s21, s22). After receiving the service request, the TMS 4 specifies the appropriate mobile terminal 5 using the personal information included in the service request, transmits coupon data corresponding to the service request via the mobile communication network 6 to the appropriate mobile terminal 5 (s31), and stores the personal information and details of the service request. After the mobile terminal 5 receives the coupon data from the TMS 4, the same processes (s13, s14) as in the first embodiment are performed.

### C-1: Supplementary Explanation Regarding the Delivery of the Coupon Data

When delivering the coupon data, the TMS 4 may perform a verification process for the user and may refrain from delivering coupon data to the user who is not a proper member. Restrictions may also be placed on frequency of delivery of coupon data or on the users who are allowed to receive coupon data (restrictions on sex or domicile, for example), with the coupon data only being delivered to users that satisfy the restrictions. It should be noted that as described in the first embodiment, the delivery of coupon data is only one example of how the present invention may be used, so that the present invention is not restricted to this example.

### D: Fourth Embodiment

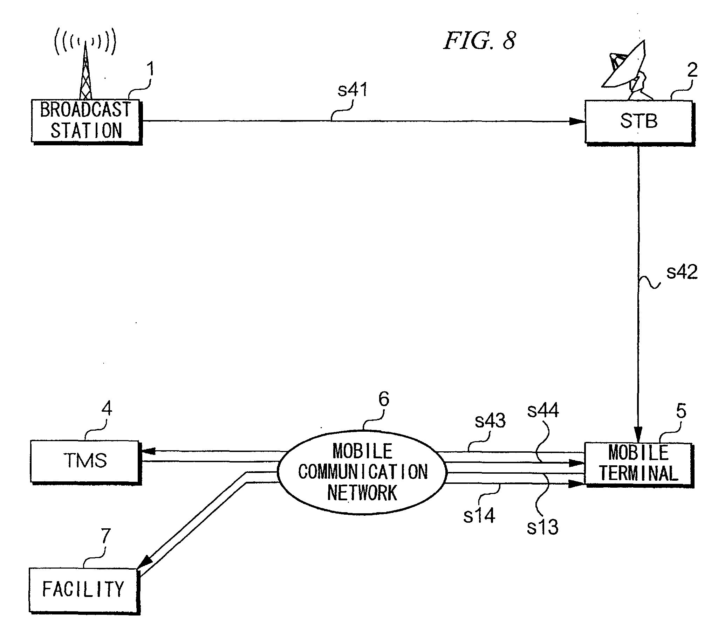

FIG. 8 is a block diagram showing the operation of a system that uses the broadcasting utilizing method according to a fourth embodiment of the present invention. In the broadcasting utilizing method shown in FIG. 8, the STB 2 receives broadcast data that includes URL(s) (Universal Resource Locator). The mobile terminal 5 stores the URL(s) and receives the desired information from the TMS 4 using one of the URL(s). It should be noted that in the present embodiment, the mobile terminal 5 has a function of obtaining contents from the URLs by designating the URL. Since mobile phones and PDAs that are equipped with this kind of function is already in widespread use, a detailed explanation of this function is omitted from this specification.

In the present embodiment, the broadcast station 1 first adds data relating to URLs to broadcast data and broadcasts the data (s41). As one example, these URLs may indicate a location of information that is present in the TMS 4 and relates to a program represented by the broadcast data. On receiving this broadcast data, the STB 2 extracts the URLs from the broadcast data and transmits the URLs to the mobile terminal 5 with which the STB 2 can communicate (s42). The mobile terminal 5 receives and stores the URLs.

When the user operates the mobile terminal 5 that has stored the URLs to select a desired URL, the mobile terminal 5 transmits a service request, which includes personal information on the user and requests information from the selected URL, via the mobile communication network 6 to the TMS 4. After receiving this service request, the TMS 4 sends back the content indicated by the URL via the mobile communication network 6 (s43), and stores the personal information and details of the service request. On receiving the content from the TMS 4, the mobile terminal 5 performs the same operations (s13, s14) as in the first embodiment based on the received content.

### E: Fifth Embodiment

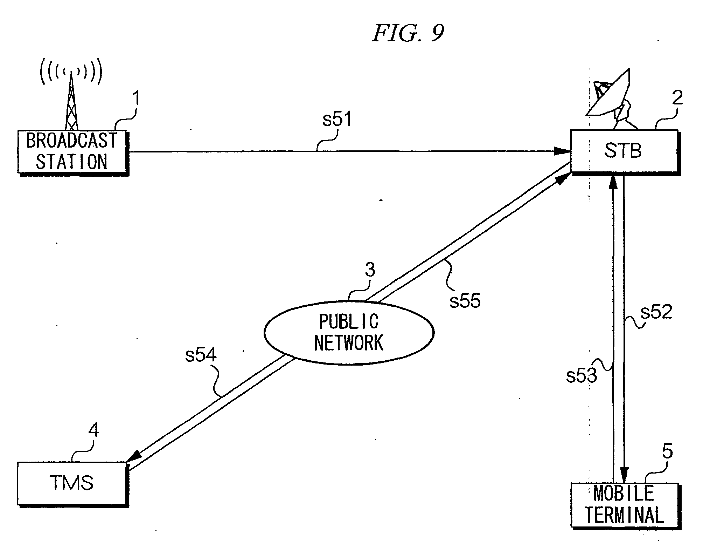

FIG. 9 is a block diagram showing the operation of a system that uses the broadcasting utilizing method according to a fifth embodiment of the present invention. In the broadcasting utilizing method shown in FIG. 9, input form data is included in the broadcast data. This input form data is received by the STB 2. The input form data has fields for inputting personal information, such as the user's name and telephone number, and a field for indicating a content which the user would like to obtain. The STB 2 transmits this input form data to the mobile terminal 5. The mobile terminal 5 writes data into the input form so as to generate a service request.

In the present embodiment, the broadcast station 1 first adds input form data, which is used for transmitting a service request to the TMS 4, to the broadcast data and broadcasts the broadcast data (s51). On receiving this broadcast data, the STB 2 reproduces the program included in the broadcast data and provides a user interface corresponding to the input form data. It should be noted that the reproduction of the program and the provision of the user interface may be simultaneously performed by dividing a display screen or by having the user selectively switch between different display screens.

The STB 2 also extracts the input form data from the received broadcast data, performs a predetermined conversion on the input form data, and transmits the resulting input form data to the mobile terminal 5 (s52). The conversion performed at this point includes a conversion for the standard screen size of the mobile terminal 5 and a conversion that adds unique identifiers to the fields into which personal information, such as the user's name and telephone number, is to be inputted. Upon receiving the input form data, the mobile terminal 5 provides a user interface corresponding to the data received. An input display screen is displayed in accordance with the input form data in the mobile terminal 5. Specifically, the screen is displayed with the personal information already entered into the fields to each of which the unique identifiers is appended. In other words, in the mobile terminal 5, the fields to which the unique identifiers were appended are automatically filled in with the personal information, thereby reducing the amount of data to be inputted by the user.

Once the user inputs information into the required fields and instructs the mobile terminal 5 to transmit the data, the mobile terminal 5 writes the inputted data into the input form and generates form data expressing the service request. The mobile terminal 5 then transmits this data to the STB 2 (s53). Upon receiving this input data, the STB 2 transmits a service request including this input data via the public network 3 to the TMS 4 (s54). After receiving this service request, the TMS 4 sends back the data corresponding to the request via the public network 3 (s54), and stores the personal information and details the service request. When receiving the service information data from the TMS 4, the STB 2 has information displayed on a television receiver in accordance with the received service information.

### F: Sixth Embodiment

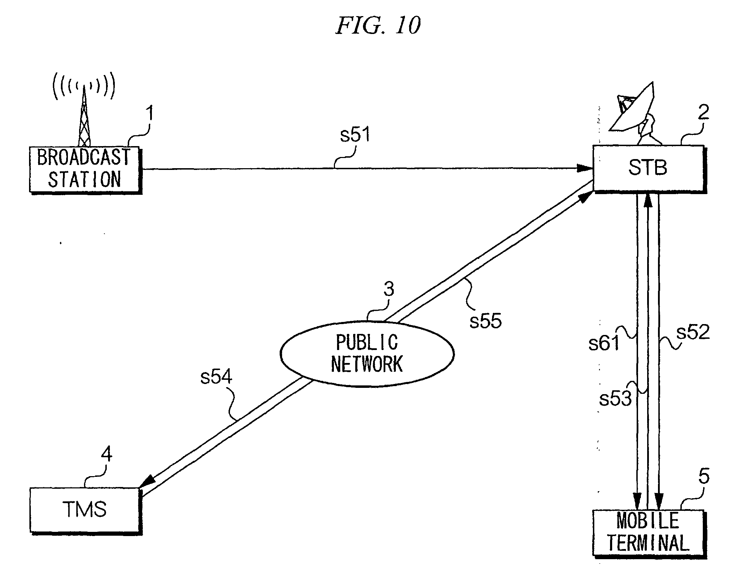

FIG. 10 is a block diagram showing the operation of a system that uses the broadcasting utilizing method according to a sixth embodiment of the present invention. The broadcasting utilizing method shown in FIG. 10 only differs from the broadcasting utilizing method of the fifth embodiment in that on receiving data from the TMS 4, the STB 2 transmits the data to the mobile terminal 5, so that the data is received by the mobile terminal 5 (s61).

### G: Seventh Embodiment

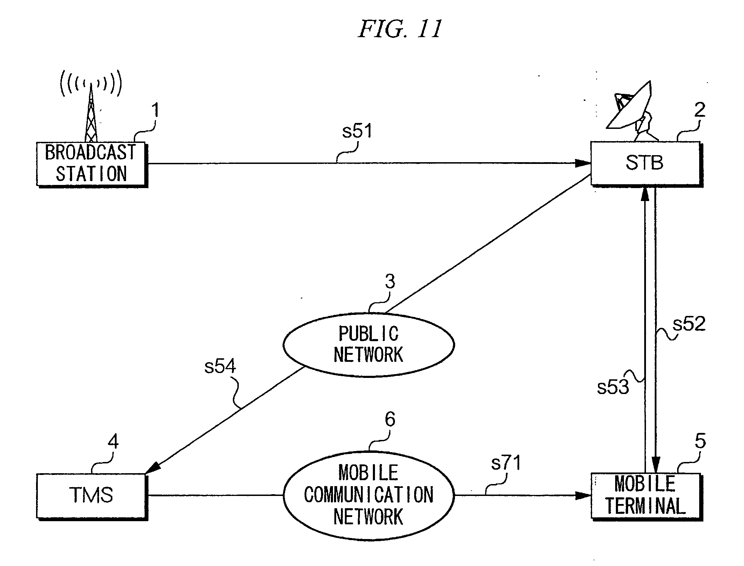

FIG. 11 is a block diagram showing the operation of a system that uses the broadcasting utilizing method according to a seventh embodiment of the present invention. The broadcasting utilizing method shown in FIG. 11 only differs from the broadcasting utilizing method of the sixth embodiment in that on receiving a service request, the TMS 4 transmits the data via the mobile communication network 6 to the mobile terminal 5, so that this data is received by the mobile terminal 5 (s71).

### H: Eighth Embodiment

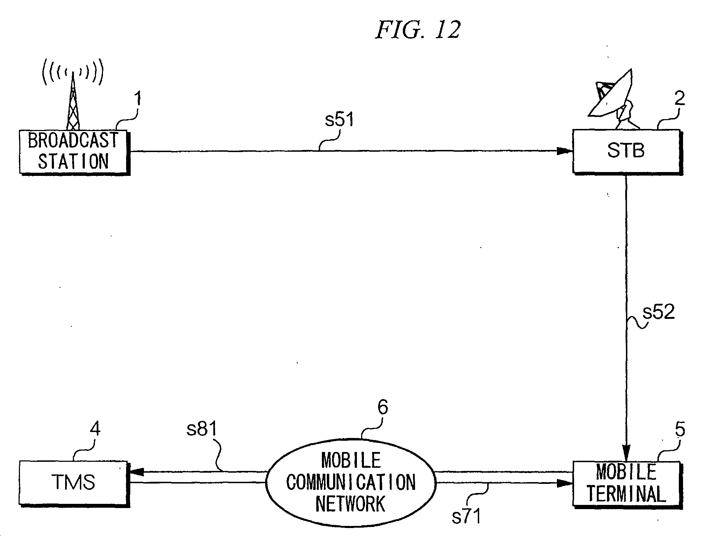

FIG. 12 is a block diagram showing the operation of a system that uses the broadcasting utilizing method according to an eighth embodiment of the present invention. The broadcasting utilizing method shown in FIG. 12 only differs from the broadcasting utilizing method of the seventh embodiment in that when the user completes the input of data into the required fields and inputs a predetermined instruction, a service request including the input data is transmitted from the mobile terminal 5 to the TMS 4 via the mobile communication network 6 (s81), and the TMS 4 operates based on this service request.

### I: Ninth Embodiment

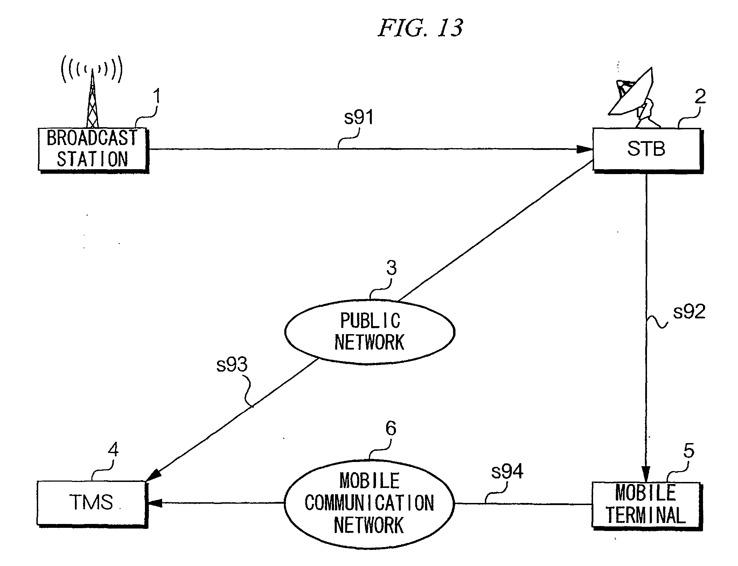

FIG. 13 is a block diagram showing the operation of a system that uses the broadcasting utilizing method according to a ninth embodiment of the present invention. The broadcasting utilizing method shown in FIG. 13 is characterized by having broadcast data (audio data and image data) that is received by the STB 2 directly transmitted to the mobile terminal 5.

As shown in FIG. 13, in the present embodiment the broadcast station 1 first broadcasts broadcast data (s91). This broadcast data includes two programs. When receiving the broadcast data, the STB 2 reproduces a first program and also transmits the broadcast data for the second program to the mobile terminal 5 (s92). On receiving this broadcast data, the mobile terminal 5 displays the second program in accordance with the received data.

When the STB 2 transmits a service request corresponding to the first program via the public network 3 to the TMS 4 (s93), identification information that can be used to exclusively specify the STB 2 is used in addition to the personal information stored in the mobile terminal 5 as the information for specifying the receiver. On the other hand, when the mobile terminal 5 transmits a service request corresponding to the second program via the mobile communication network 6 to the TMS 4 (s94), only the personal information stored in the mobile terminal 5 is used as the information for specifying the receiver.

As described above, with the present embodiment, a plurality of programs can be simultaneously used for only one television receiver. It should be noted that the STB 2 may be equipped with a plurality of receivers so as to use broadcast data from a plurality of broadcasting systems (e.g., a plurality of channels).

### J: Tenth Embodiment

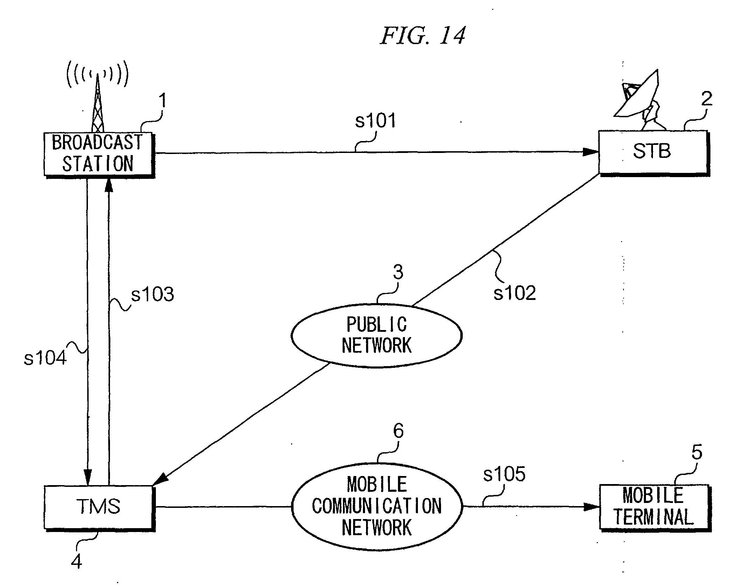

FIG. 14 is a block diagram showing the operation of a system that uses the broadcasting utilizing method according to a tenth embodiment of the present invention. The broadcasting utilizing method shown in FIG. 14 is characterized by the TMS 4 receiving a content from the broadcast station 1 and transmitting this content to the mobile terminal 5. It should be noted that to simplify the explanation, the operation of the present embodiment is described using one example of a service model where a ringtone (content) is delivered in conjunction with the displaying of a program.

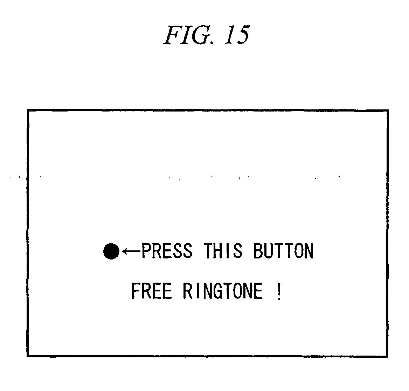

As shown in FIG. 14, in the present embodiment, the broadcast station 1 first broadcasts broadcast data (s101). This broadcast data corresponds to a music program, which is reproduced by the STB 2 that has received the broadcast data. During the reproduction of the program, the display screen shown in FIG. 15 is displayed on the television receiver. If the user operates the mobile terminal 5 at this point and inputs an instruction to download a ringtone corresponding to a melody which is being reproduced on the television receiver, the STB 2 receives the instruction and transmits a service request that corresponds to the instruction and includes the appropriate personal information via the public network 3 to the TMS 4 (s102).

On receiving the service request and the personal information, the TMS 4 sends a request to the broadcast station 1 via the dedicated line to download the ringtone in accordance with the service request (s103). In response to this, the broadcast station 1 transmits the ringtone to the TMS 4 (s104). The TMS 4 then transmits the ringtone via the mobile communication network 6 to the mobile terminal 5 that is specified from the personal information (s105).

It should be noted that the broadcast station 1 may accumulate download request data from the TMS 2 to use this data as for a marketing research. Also, as mentioned earlier, the delivery of ringtones in conjunction with the music program is only one example of the present embodiment, so the method of the present embodiment may be used in a variety of other ways.

### K: Application example 1

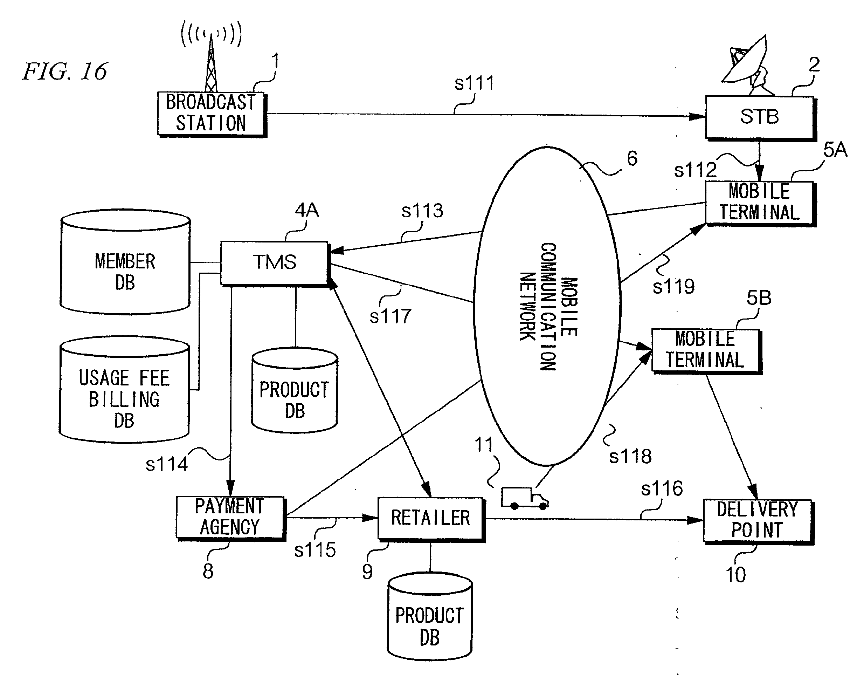

FIG. 16 shows a shopping transfer system according to an application example of the broadcasting utilizing methods described as the embodiments of the present invention. In FIG. 16, mobile terminals 5A and 5B have the same functions as the mobile terminal 5 described above, but have been given different reference numerals as they belong to different users. A TMS 4A differs from the TMS 4 in that the TMS 4A includes a member DB (database) in which the personal information of members is stored, in that a verification of users is performed, in that a user of the shopping transfer system is billed using a usage fee billing DB in which contract information corresponding to the personal information of members, usage fee information, and payment information are stored, and in that processing is performed to sell products using a product DB that stores product information.

Also, in FIG. 16, numeral 8 is a payment agency (such as a bank or credit institution), numeral 9 is a retailer that actually sells products (such as a distributor or a manufacturer), numeral 10 is a delivery point (such as a station or a convenience store) that temporarily stores products that have been sent from the retailer 9, and numeral 11 is a vehicle that is used to deliver products from the retailer 9 to the delivery point 11. Of these, the payment agency 8 and the vehicle 11 are capable of communicating via the mobile communication network 6. The retailer 9 is provided with a product DB, with the product DB in the TMS 4A being updated based on the product DB of the retailer 9.

In a shopping transfer system of the above construction, the broadcast station 1 first broadcasts broadcast data (s111). This broadcast data corresponds to a shopping program. When this broadcast data is received by the STB 2 and the mobile terminal 5A, the user (hereafter, the "purchaser") gives instructions so that a request relating to the purchase, delivery and payment for a product desired by the purchaser is finally transmitted via the mobile communication network 6 from the mobile terminal 5A to the TMS 4A (s112, s113). It should be noted that the request sent from the mobile terminal 5A to the TMS 4A includes information specifying the product, personal information on the purchaser, and personal information on the person to receive the product (hereinafter, the "recipient").

Upon receiving the request described above, the TMS 4A first uses the member DB to judge whether the purchaser is a valid user. On judging that the purchase is a valid user, the TMS 4A uses the product DB to specify the price and retailer of the product and uses the usage fee billing DB to obtain payment information, before requesting the payment agency 8 to handle the payment based on this information (s114). When the payment has been made successfully, the payment agency 8 transmits information showing the payment details to the retailer 9 (s 115). The TMS 4A also transmits information regarding the sale to the retailer 9. Based on this information, the retailer 9 performs a retail process, and gives a notification of the expected date for delivery of the product from the retailer 9 to the delivery point 10 (s116).

The TMS 4A also provides, via the mobile communication network 6, the user of the mobile terminal 5B as the recipient of the product with information based on the request sent from the mobile terminal 5A to the TMS 4A. As a result, the recipient is informed that the purchaser has bought the product and that the product is going to be delivered to the recipient. After the recipient has been informed, the TMS 4A updates the billing information corresponding to the purchaser in the usage fee billing DB. Next, once the product has been shipped by the retailer 9, the vehicle 11 that delivers the product sends reception information to the mobile terminal 5B of the recipient to receive the product (s118). This reception information includes date and time information showing when the recipient can receive the product at the delivery point 10, thus informs the recipient of the expected time of arrival of the product.

After this, the recipient takes the mobile terminal 5B to the delivery point 10 at or after the expected time of arrival, and operates the mobile terminal 5B to display the reception information. The recipient then shows this to the attendant at the delivery point 10 and so is able to receive the product.

### L: Application example 2

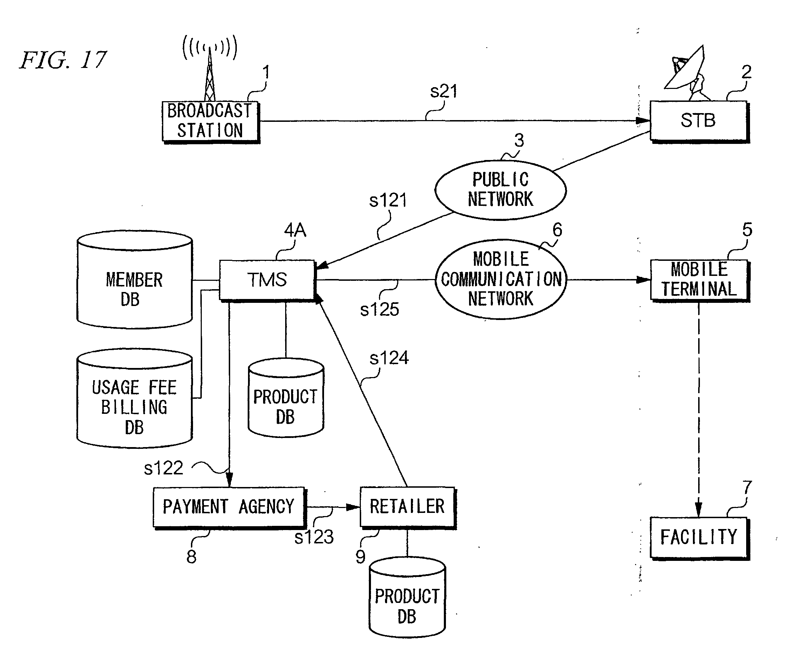

FIG. 17 shows an electronic ticket system according to an application example of the broadcasting utilizing methods described as the embodiments of the present invention. In the electronic ticket system shown in FIG. 17, the broadcast station 1 first broadcasts broadcast data (s21). This broadcast data corresponds to a program that provides event information, such as movie information or concert information. When the receiver side of the STB 2 and the mobile terminal 5A, receives this broadcast data, a purchase/payment request for electronic tickets desired by the user is finally transmitted from the STB 2 via the public network 3 to the TMS 4A (s121) based on user's instructions. It should be noted that the request sent from the mobile terminal 5A to the TMS 4A includes information specifying the electronic tickets and personal information on the user.

Upon receiving the above request, the TMS 4A first uses the member DB to judge whether the purchaser is a valid user. On judging that the purchaser is a valid user, the TMS 4A uses the product DB to specify the price and retailer of the product and uses the usage fee billing DB to obtain payment information, before requesting the payment agency 8 to handle the payment based on this information (s122). When the payment is made successfully, the payment agency 8 transmits information showing the payment details to the retailer 9 (s123). The retailer 9 who has received this information transmits the electronic tickets to the TMS 4A (s124). After receiving the electronic tickets, the TMS 4A transmits the electronic tickets via the mobile communication network 6 to the mobile terminal 5, and updates the payment information corresponding to the user in the usage fee billing DB.

The electronic tickets are received and stored by the mobile terminal 5. The user who carries the mobile terminal 5 that stores the electronic tickets goes to the available facility 7 (a site such as a cinema or concert hall) at the appropriate time for the electronic tickets, has the electronic tickets displayed, to show the electronic tickets to the attendant at the facility 7, so that the user is able to enter the facility 7.

### M: Supplementary Information

As described above, in the various embodiments and application examples of the present invention, the user is able to make use of service information appended to broadcasts using a mobile terminal by which the user can be exclusively specified. As a result, far more advanced services can be provided than was conventionally possible. In particular, the system based on the embodiments, in which service information appended to broadcasts is stored in a mobile terminal to be used to provide a variety of services, has a further advantage that a user is able to obtain the service in any place, not just indoors.

It should be noted that while the above embodiments have been described using specific example constructions, the present invention is not restricted to these example constructions. As one example, the communication between the STB and the TMS and/or the communication between the broadcast station and the TMS may be performed via a mobile communication network. Also, while packet exchange is suited to communication on public networks and mobile communication networks, a line switched network may be used provided that the higher communication costs can be borne. In the examples given above, mobile phones are given as examples of the mobile terminals that can be used. Needless to say, such mobile phones may equip a SIM (Subscriber Identification Module) card or UIM (User Identification Module) Chip.

## Claims

1. A broadcasting utilizing method comprising the steps of:
receiving service information, which expresses a qualification for receiving a service, together with a broadcast and transmits the service information to a mobile terminal by a receiver; and
receiving and storing the service information, and outputting stored service information in accordance with an instruction received from a user by the mobile terminal.

2. A broadcasting utilizing method comprising the steps of:
receiving service information, which expresses a qualification for receiving a service, together with a broadcast and outputting the service information by a receiver;
transmitting, in accordance with a user request, a service request to the receiver, the service request including personal information on a user that is stored in advance and information on the qualification for receiving a service by a mobile terminal;
transmitting the service request to a service providing device by the receiver;
receiving the service request and transmitting information corresponding to the service request to the receiver by the service providing device; and
transmitting the information corresponding to the service request to the mobile terminal by the receiver.

3. A broadcasting utilizing method comprising the steps of:
receiving service information, which expresses a qualification for receiving a service, together with a broadcast and outputting the service information by a receiver;
transmitting, in accordance with a user request, a service request to the receiver, the service request including personal information on the user that is stored in advance and information on the qualification for receiving a service by a mobile terminal;
transmitting the service request to a service providing device by the receiver; and
receiving the service request and transmitting information corresponding to the service request to the mobile terminal by the service providing device.

4. A broadcasting utilizing method comprising the steps of:
receiving service information composing an actual service together with a broadcast and outputting the service information by a receiver;
transmitting a service request, which includes personal information on a user that is stored in advance, to the receiver by a mobile terminal; transmitting the service request to a service providing device by the receiver; and
receiving the service request and transmitting information corresponding to the service request to the mobile terminal by the service providing device.

5. A broadcasting utilizing method comprising the steps of:
receiving service information, which includes an address at which a service is provided, together with a broadcast, and transmitting the service information to a mobile terminal by a receiver;
receiving the service information, generating a service request based on personal information on a user that is stored in advance and the service information, and transmitting the service request to a service providing device by the mobile terminal; and
receiving the service request and transmitting information that corresponds to the service request to the mobile terminal by the service providing device.

6. A broadcasting utilizing method comprising the steps of:
receiving service information, which includes a format that is used when providing information which is required for a user to make use of a service, together with a broadcast and transmitting the service information to a mobile terminal by a receiver;
receiving the service information, generating a service request based on personal information on a user that is stored in advance and the service information, and transmitting the service request to the receiver by the mobile terminal;
receiving the service request and transmitting the service request to a service providing device by the receiver;
receiving the service request and the personal information and transmitting information corresponding to the service request to the receiver by the service providing device; and
receiving and outputting the information corresponding to the service request by the receiver.

7. A broadcasting utilizing method comprising the steps of:
receiving service information, which includes a format that is used when providing information which is required for a user to make use of a service, together with a broadcast and transmits the service information to a mobile terminal by a receiver;
receiving the service information, generating a service request based on personal information on a user that is stored in advance and the service information, and transmitting the service request to the receiver by the mobile terminal;
receiving the service request and transmitting the service request to a service providing device by the receiver;
the service providing device receiving the service request and transmitting information corresponding to the service request to the receiver by the receiver; and
transmitting the information corresponding to the service request to the mobile terminal by the receiver.

8. A broadcasting utilizing method comprising the steps of:
receiving service information, which includes a format that is used when providing information which is required for a user to make use of a service, together with a broadcast and transmitting the service information to a mobile terminal by a receiver;
receiving the service information, generates a service request based on personal information on a user that is stored in advance and the service information, and transmitting the service request to the receiver by the mobile terminal;
receiving the service request and transmitting the service request to a service providing device by the receiver; and
receiving the service request and transmitting information corresponding to the service request to the mobile terminal by the service providing device.

9. A broadcasting utilizing method comprising the steps of:
receiving service information, which specifies a type of service, together with a broadcast and transmitting the service information to a mobile terminal by a receiver;
receiving the service information, generating a service request based on the personal information on a user that is stored in advance and the service information, and transmitting the service request to the receiver by the mobile terminal;
the service request and transmitting the service request to a service providing device by the receiver receiving; and
receiving the service request and transmitting, to a service provider, an instruction for a provision of a service corresponding to the service request by the service providing device.

10. A receiver for being used in a broadcasting utilizing system including a service providing device for providing a service in response to a service request and a mobile terminal that stores personal information on a user, comprising:
means for receiving a broadcast;
means for extracting service information appended to the broadcast;
means for receiving a service request that is generated based on the service information and is transmitted by the mobile terminal, the service request and including the personal information;
means for transmitting the service request to the service providing device; and
means for receiving information corresponding to the service request from the service providing device and transmitting information to the mobile terminal.

11. The receiver according to claim 10, wherein the receiver transmits to the mobile terminal the information corresponding to the service request that is received from the service providing device.

12. A mobile terminal for being used in a broadcasting utilizing system including a receiver for receiving service information appended to a broadcast and a service providing device for providing a service in response to a service request that has been received, comprising:
means for storing personal information;
means for receiving the service information from the receiver; and
means for generating a service request based on the service information and
the personal information and transmitting the service request to the service providing device.

13. A mobile for being used in a broadcasting utilizing system including a receiver for receiving service information appended to a broadcast and transmitting information to the mobile terminal and a service providing device for providing a service in response to a service request, comprising:
means for storing personal information;
means for receiving the service information from the receiver; and
means for generating a service request based on the service information and
the personal information and transmitting the service request to the receiver.

14. A mobile terminal for being used in a broadcasting utilizing system including a receiver for receiving service information appended to a broadcast and transmitting information to the mobile terminal and a service providing device for providing a service in response to a service request, comprising:
means for storing personal information;
means for receiving the service information from the receiver;
means for generating a service request based on the service information and
the personal information and transmitting the service request to the service providing device; and
means for receiving information corresponding to the service request from the receiver.

15. A mobile terminal for being used in a broadcasting utilizing system including a receiver for receiving service information appended to a broadcast and a service providing device for providing a service in
response to a service request, comprising:
means for storing personal information;
means for receiving the service information from the receiver;
means for generating a service request based on the service information and
the personal information and transmitting the service request to the service providing device; and
means for receiving information corresponding to the service request from the receiver.

16. A mobile terminal for being used in a broadcasting utilizing system including a receiver for receiving service information appended to a broadcast and transmitting information to the mobile terminal and a service providing device for providing a service in response to a service request, comprising:
means for storing personal information;
means for receiving the service information from the receiver;
means for generating a service request based on the service information and
the personal information and transmitting the service request to the receiver; and
means for receiving information corresponding to the service request from the receiver.

17. A mobile terminal for being used in a broadcasting utilizing system including a receiver for receiving service information appended to a broadcast and transmitting information to the mobile terminal and a service providing device for providing a service in response to a service request, comprising:
means for storing personal information;
means for receiving the service information from the receiver;
means for generating a service request based on the service information and
the personal information and transmitting the service request to the receiver; and
means for receiving information corresponding to the service request from the service providing device.
